# EUROPEAN PATENT APPLICATION

(11) **EP 2 618 319 A1**
(43) Date of publication of application: **24.07.2013**
(21) Application number: 13151068.7
(22) Date of filing: 11.01.2013
(51) Int. Cl.: G08B 27/00, H04H 20/59

(54) **Television receiver**

(30) Priority: 20.01.2012 JP 2012010239
(71) Applicant: Funai Electric Co., Ltd., Daito-shi Osaka 574-0013 (JP)
(72) Inventor: Ishihara, Kazuhide, Osaka, Osaka 574-0013 (JP)
(74) Representative: Giovannini, Francesca

(57) **Abstract**

A television receiver (1) includes a broadcast reception unit (3) that receives broadcast signals from broadcasting stations, a judgment unit (4) that judges whether or not an emergency alert broadcast signal is included in the broadcast signal received by the broadcast reception unit (3), a display unit (5) that, when the judgment unit (4) judges that the emergency alert broadcast signal is included in the broadcast signal, displays emergency alert information based on the emergency alert broadcast signal, an information transmission unit (6) that, when the judgment unit (4) judges that the emergency alert broadcast signal is included in the broadcast signal, wirelessly transmits to other television receivers (1) an alert issuance information signal indicating that a broadcasting station is broadcasting an emergency alert, an information reception unit (6) that wirelessly receives the alert issuance information signal from other television receivers (1), and a control unit (9).

## Description

### [Technical Field]

The present invention relates to a television receiver that receives broadcast signals from a broadcasting station.

### [Background Art]

When a disaster such as an earthquake or tsunami occurs or is predicted to occur, broadcasting stations transmit an emergency alert broadcast signal indicating information about the occurrence or prediction of a disaster included in a digital television broadcast signal (referred to below as "broadcast signal"). One television (referred to below as "TV") receiver known since the past is one capable of detecting an emergency alert broadcast signal within a broadcast signal, and when an emergency alert broadcast signal is detected while a broadcast signal is being received and a broadcast program is being displayed (referred to below as "while a broadcast program is being watched"), it displays emergency alert information.

In this TV receiver, when an emergency alert broadcast signal is transmitted from a broadcasting station while a broadcast program is being watched, it is possible to both receive the emergency alert broadcast signal and display emergency alert information, and the user can be alerted of danger based on the emergency alert information. This, however, assumes that the user is watching a broadcast program. Therefore, when the TV receiver is in standby mode in which both the broadcast reception function and the display function are off, the TV receiver cannot receive the emergency alert broadcast signal and cannot display emergency alert information if an emergency alert broadcast signal is transmitted from a broadcasting station. Therefore, the user cannot be alerted of danger.

Another known television receiver is one which continues to receive broadcast signals via the broadcast reception circuit even in standby mode. However, the broadcast signal reception process includes processes such as demodulation of the broadcast signal, demodulation into video/audio/control signals, separation of the broadcast signals, and decoding of each of the signals after separation. Thus, power consumption during standby mode ends up increasing because power consumption of the reception process is relatively large.

Incidentally, a known TV receiver capable of detecting an emergency alert broadcast signal within a broadcast signal is one which, when it detects an emergency alert broadcast signal, transmits information for reporting this detection to nearby information terminals (for example, refer to Patent References 1 through 3).

### [Relevant References]

### [Patent References]

[Patent Reference 1] Japanese Unexamined Patent Application Publication No. 2008-166863
   Japanese Unexamined Patent Application Publication No. 2007-17008
   Japanese Unexamined Patent Application Publication No. 2005-277630

### [Summary of the Invention]

One or more embodiments of the present invention provide a television receiver that can receive an emergency alert broadcast signal and display emergency alert information whenever an emergency alert broadcast signal is transmitted from a broadcasting station, and can keep energy consumption down.

In one aspect, the television receiver of the present invention includes a broadcast reception unit that receives broadcast signals from broadcasting stations; a judgment unit that judges whether or not an emergency alert broadcast signal is included in the broadcast signals received by the broadcast reception unit; a display unit that, when the judgment unit judges that the emergency alert broadcast signal is included in the broadcast signals, displays emergency alert information based on the emergency alert broadcast signal; an information transmission unit that, when the judgment unit judges that the emergency alert broadcast signal is included in the broadcast signals, wirelessly transmits to other television receivers an alert issuance information signal indicating that a broadcasting station is broadcasting an emergency alert; an information reception unit that wirelessly receives the alert issuance information signal from other television receivers; and a control unit that, when the alert issuance information signal is received by the information reception unit, switches the broadcast reception unit and the display unit to an operating state if the broadcast reception unit and the display unit are in a standby state.

In one or more embodiments of the present invention, the television receiver further includes a storage unit that stores a transmission flag that is set to on when the alert issuance information signal has been transmitted and set to off when the alert issuance information signal has not been transmitted, wherein the control unit transmits the alert issuance information signal to the information transmission unit and switches the transmission flag to the on state if the transmission flag stored in the storage unit is in the off state when the judgment unit judges that the emergency alert broadcast signal is included in the broadcast signal, and returns the transmission flag to the off state once a prescribed duration has elapsed after transmission of the alert issuance information signal, and does not transmit the alert issuance information signal to the information transmission unit if the transmission flag is in the on state.

In one or more embodiments of the present invention, the television receiver further includes a reception setting switching unit that switches between the operating state and the standby state of the information reception unit.

In one or more embodiments of the present invention, the television receiver further includes a connection unit capable of connecting with a video playback device, wherein the display unit is capable of displaying video played back by the video playback device connected to the connection unit, and the control unit places the broadcast reception unit into the standby state during the display period of the video by the display unit, and when the alert issuance information signal is received by the information reception unit, switches the broadcast reception unit to the operating state and displays emergency alert information on the display unit.

In one or more embodiments of the present invention, the information transmission unit and the information reception unit perform communication conforming to wireless LAN standards.

According to one or more embodiments of the present invention, if another television receiver of the same configuration as the present invention is installed within the range of wireless communication and the broadcast reception unit of that television receiver is in the operating state, an emergency alert broadcast signal is received by that broadcast reception unit and an alert issuance information signal is transmitted from the information transmission unit of that television receiver whenever an emergency alert broadcast signal is issued from a broadcasting station. Accordingly, in one or more embodiments, when the information reception unit of the TV receiver of the present invention other than the TV receiver that was the transmission source of that signal receives an alert issuance information signal, the broadcast reception unit and display unit are switched to the operating state even if they were in the standby state. For this reason, reception of an emergency alert broadcast signal and display of emergency alert information become possible. Therefore, the broadcast reception unit and display unit do not have to be in the operating state to receive an emergency alert broadcast signal and display emergency alert information. As a result, power consumption can be kept down due to the fact that the broadcast reception unit and display unit are set to the standby state.

### [Brief Description of the Drawings]

FIG. 1 is a diagram for explaining the schematic configuration of a television receiver pertaining to an embodiment of the present invention.
FIG. 2 is an electrical block diagram of the aforementioned television receiver.
FIG. 3 is a flowchart of the control process in the aforementioned television receiver.
FIG. 4 is an electrical block diagram of a television receiver pertaining to another example of the aforementioned embodiment.
FIG. 5 is an electrical block diagram of a television receiver pertaining to another example.
FIG. 6 is a flowchart of the control process in the aforementioned television receiver.

### [Detailed Description of the Invention]

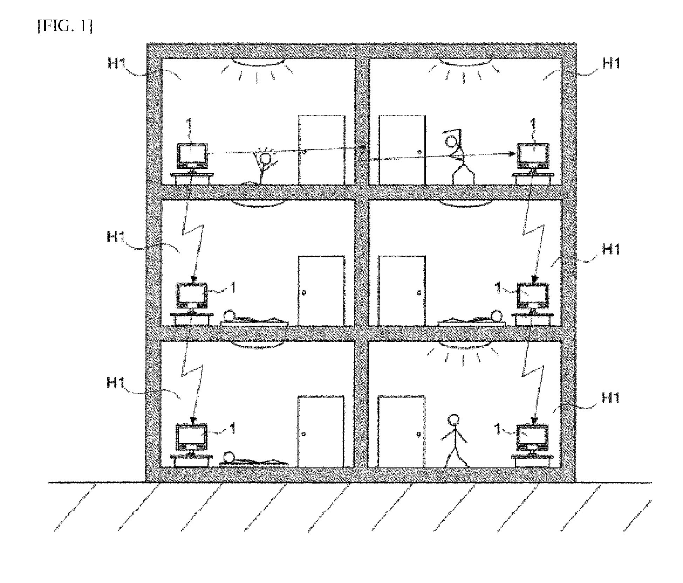

A television (referred to as "TV" hereinafter) receiver pertaining to an embodiment of the present invention will be described in reference to the drawings. First, the schematic configuration of the TV receiver of this embodiment will be described. Here, as shown in FIG. 1, TV receivers 1 of this embodiment are installed in a plurality of homes H1, and among these TV receivers, only one - for example, TV receiver 1 (the top-most TV receiver 1 on the left side in the figure) - is receiving digital TV broadcast signals (referred to simply as "broadcast signals" hereinafter), and the other TV receivers 1 are not receiving broadcast signals and are in standby. In this situation, if a disaster occurs or the occurrence of a disaster is predicted, broadcasting stations transmit an emergency alert broadcast signal piggybacked on the broadcast signal, and the TV receiver 1 which is receiving broadcast signals receives that emergency alert broadcast signal.

In this case, the TV receiver 1 that has received an emergency alert broadcast signal displays emergency alert information, and also wirelessly transmits an alert issuance information signal, which indicates that a broadcasting station is broadcasting an emergency alert, to an undetermined number of other nearby TV receivers 1 that are in standby. The other TV receivers 1 which have wirelessly received this alert issuance information signal return from the standby state and receive broadcast signals. Then, when an emergency alert broadcast signal is included in a received broadcast signal, those TV receivers 1 transmit alert issuance information signals to yet other TV receivers 1.

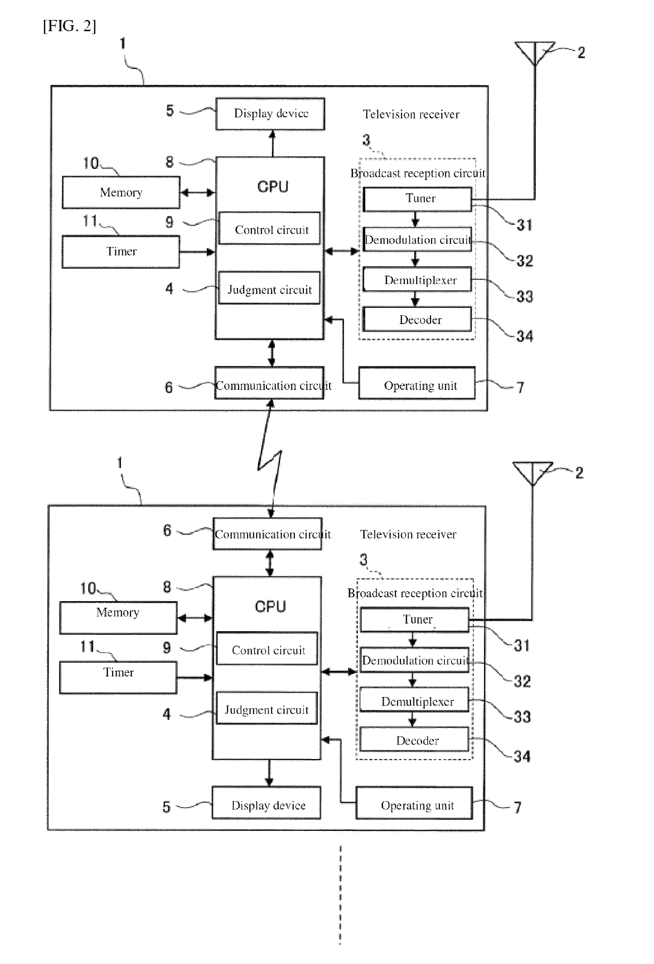

FIG. 2 illustrates the detailed configuration of the TV receiver 1. The TV receiver 1 has a broadcast reception circuit 3 (broadcast reception unit) which receives broadcast signals from broadcasting stations via an antenna 2; a judgment circuit 4 (judgment unit) which judges whether or not an emergency alert broadcast signal is included in the broadcast signal received by the broadcast reception circuit 3; a display device 5 (display unit) which, when it is judged by the judgment circuit 4 that an emergency alert broadcast signal is included in the broadcast signal, displays emergency alert information based on the emergency alert broadcast signal; a communication circuit 6 (information transmission unit) which, when the aforementioned judgment was made by the judgment circuit 4, wirelessly transmits an alert issuance information signal to other TV receivers 1; and an operating unit 7. The operating unit 7 has a state switch for switching both the broadcast reception circuit 3 and display device 5 between the operating state and the standby state in which operation is stopped.

The judgment circuit 4 is built into a CPU 8 mounted in the TV receiver 1. The CPU 8 also has a control circuit 9 (control unit) which switches the broadcast reception circuit 3 and display device 5 between the operating state and the standby state in accordance with operations by a user on the operating unit 7. The communication circuit 6 (information reception unit) is configured so as to be capable of wirelessly receiving alert issuance information signals from other TV receivers 1, and it performs communication conforming to wireless LAN standards. Here, when the alert issuance information signal was received by the communication circuit 6 from another TV receiver 1, the broadcast reception circuit 3 and display device 5 were in the standby state. In this case, the control circuit 9 switches the broadcast reception circuit 3 and display device 5 from the standby state to the operating state. Also, the TV receiver 1 has a memory 10 and a timer 11, and, although not illustrated in the drawings, it also has a speaker that outputs the audio of broadcast programs and so forth.

Incidentally, in a broadcast signal, the video signal and audio signal of the broadcast program as well as various control signals are multiplexed. These control signals include a PMT (program map table) and a TMCC (transmission and multiplexing configuration control) signal. When a disaster such as an earthquake or tsunami occurs or if their occurrence is predicted, an emergency alert broadcast activation flag (referred to simply as "activation flag" hereinafter) in the transmission multiplex control signal is set to "1" for an emergency information broadcast signal, and additionally, an emergency information descriptor in the PMT is set to indicate the contents of the emergency alert information.

The broadcast reception circuit 3 has a tuner 31 which selects the channel of the broadcast signal received via the antenna 2 and receives the broadcast signal of the selected channel; a demodulation circuit 32 which demodulates the broadcast signal received by the tuner 31; a demultiplexer 33 which separates the video signal, audio signal and control signals from the broadcast signal demodulated by the demodulation circuit 32; and a decoder 34 which decodes the video signal, audio signal and control signals separated by the demultiplexer 33.

The judgment circuit 4 analyzes the control signals decoded by the decoder 34, and by recognizing that the activation flag in the transmission multiplex control signal is "1" and/or that the emergency information descriptor in the PMT indicates emergency alert information, it judges that an emergency alert information signal is included in the broadcast signal. The display device 5 is a display for displaying a TV broadcast program (referred to as "broadcast program" hereinafter) based on the broadcast signal received by the broadcast reception circuit 3, and is also used to display emergency alert information. The operating unit 7 has selection switches for selecting the channel received by the broadcast reception circuit 3.

The control circuit 9 selects the channel received by the broadcast reception circuit based on user operations using the selection switches of the operating unit 7. Also, the control circuit 9 displays the video of the broadcast program on the display device 5 and outputs the audio of the broadcast program to the aforementioned speaker based on the video signal and audio signal decoded by the decoder 34 from the broadcast signal of the received channel.

Further, when an emergency alert broadcast signal is included in the broadcast signal of the received channel, the control circuit 9 displays emergency alert information on the display device 5 based on that emergency alert broadcast signal and generates an alert issuance information signal, and transmits the generated alert issuance information signal to the communication circuit 6. Also, the control circuit 9 switches the state of the broadcast reception circuit 3 and display device 5 by turning on and off the supply of power to the broadcast reception circuit 3 and display device 5 from a power supply not illustrated in the drawings.

The memory 10 (storage unit) stores a transmission flag that indicates whether or not an alert issuance information signal has been transmitted. This transmission flag is set to "1" (on) if an alert issuance information signal has been sent, and is set to "0" (off) if an alert issuance information signal has not been sent. This setting is performed by the control circuit 9. The timer 11 is for measuring the elapsed time after transmission of an alert issuance information signal.

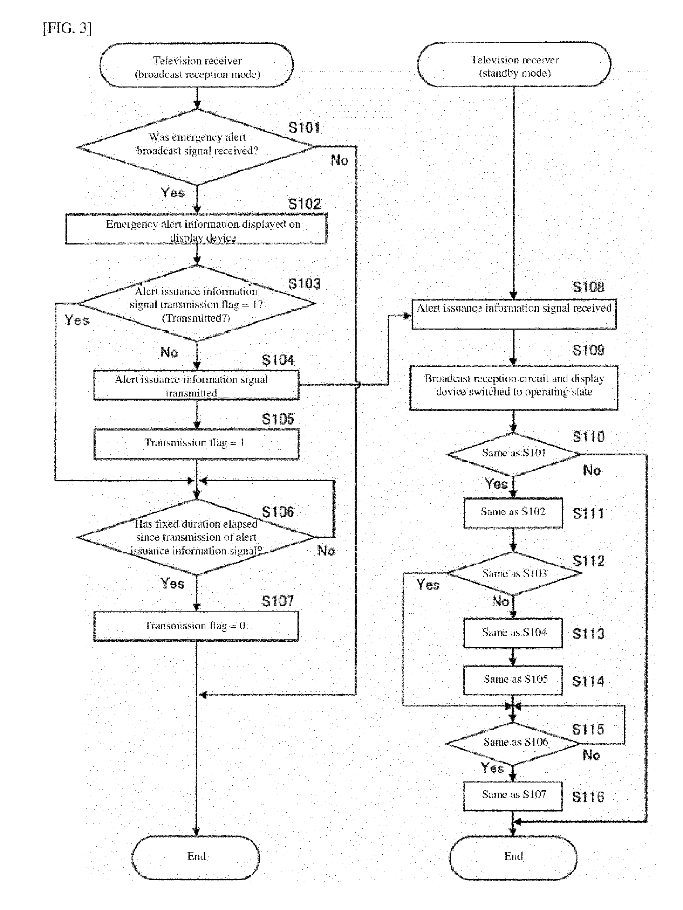

FIG. 3 illustrates the control process performed by the CPU 8 (judgment circuit 4 and control circuit 9). In the figure, it is assumed that two TV receivers 1 are installed within the range of wireless LAN communication. Here, the mode in which the broadcast reception circuit 3 and the display device 5 in a TV receiver 1 is in the operating state is called broadcast reception mode, and the mode in which the broadcast reception circuit 3 and the display device 5 are in the standby state is called standby mode. The operating unit 7 can switch the TV receiver 1 between broadcast reception mode and standby mode using the aforementioned state switch. In the figure, one of the two TV receivers 1 has been set to broadcast reception mode using the operating unit 7, and the other TV receiver 1 has been set to standby mode using the operating unit 7.

In this case, in the TV receiver 1 that is in broadcast reception mode, the judgment circuit 4 judges whether or not an emergency alert broadcast signal has been received by the broadcast reception circuit 3. If it is judged that an emergency alert broadcast signal was received (Yes in S101), the control circuit 9 displays the emergency alert information indicated by the emergency descriptor on the display device 5 (S102). Further, the control circuit 9 accesses the memory 10 and checks the content of the emergency alert broadcast signal transmission flag stored in the memory 10. If the transmission flag is set to "0" (off state) rather than "1" (No in S103), the control circuit 9 transmits an alert issuance information signal to the communication circuit 6 (S104) and also sets the transmission flag to "1" (on state) (S105). If it is confirmed in the process of S103 that the transmission flag is set to "1" (Yes in S 103), the control circuit 9 does not transmit an alert issuance information signal to the communication circuit 6. The control circuit 9 measures the elapsed time from transmission of alert issuance information using the timer 11, and when that measured time reaches a prescribed duration (Yes in S106), the transmission flag in the memory 10 is reset to "0" (S107).

In the TV receiver 1 that is in standby mode, when an alert issuance information signal from the TV receiver 1 that is in the operating state is received via the communication circuit 6 (S108), the control circuit 9 switches the broadcast reception circuit 3 and the display device 5 from the standby state to the operating state (S109). After that, the judgment circuit 4 and the control circuit 9 execute the processes of S110-S116, which have the same contents as S101-S107, respectively.

In this embodiment, if the other TV receiver 1 is installed within the range of wireless communication and the broadcast reception circuit 3 of that TV receiver 1 is in the operating state, an emergency alert broadcast signal is received by that broadcast reception circuit 3 and an alert issuance information signal is transmitted from the communication circuit 6 of the TV receiver 1 whenever an emergency alert broadcast signal is sent from a broadcasting station. Accordingly, when the communication circuit 6 in a TV receiver 1 other than the TV receiver 1 that was the transmission source of that signal receives an alert issuance information signal, the broadcast reception circuit 3 and display device 5 are switched to the operating state even if they were in the standby state. For this reason, reception of an emergency alert broadcast signal and display of emergency alert information become possible. Therefore, the broadcast reception circuit 3 and display device 5 do not have to be in the operating state to receive an emergency alert broadcast signal and display emergency alert information. As a result, power consumption can be kept down due to the fact that the broadcast reception circuit 3 and display device 5 are set to the standby state -- that is, the TV receiver 1 is set to standby mode.

The communication protocol of the communication device 6 conforms to wireless LAN standards, and processing by the communication circuit 6 is simple and consumes little power compared to processing by the broadcast reception circuit 3. Therefore, regardless of the mode of the TV receiver 1, even though the communication circuit 6 is set to always operate so that it can respond to an emergency alert broadcast signal at any time, power consumption is low compared to the case where the broadcast reception circuit 3 is always operating, as in prior art.

Furthermore, if an emergency alert broadcast signal from a broadcasting station is received and an alert issuance information signal is sent once to other TV receivers 1 at the time it is received, the alert issuance information signal is not retransmitted even if the emergency alert broadcast signal is received again within a prescribed duration after that. Therefore, communication traffic can be reduced, and the processing load on the other TV receivers 1 that are transmission destinations can be kept down. Further, since it automatically returns to the state where alert issuance information signal transmission is possible after a prescribed duration elapses, no operation is necessary to restore its state, which is convenient.

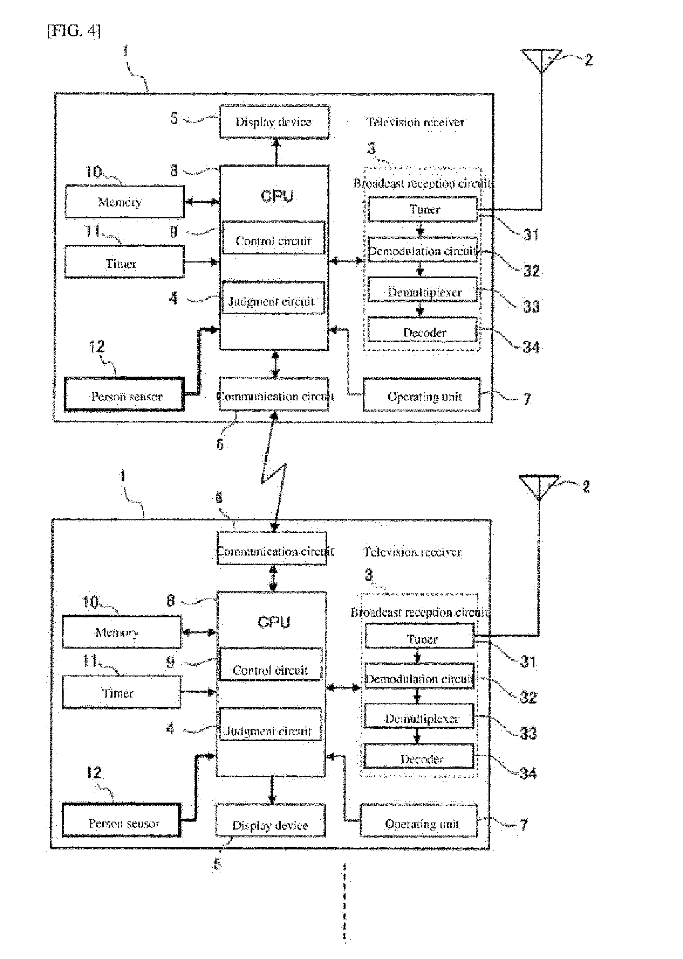

Next, a TV receiver 1 pertaining to another example of the above embodiment will be described. FIG. 4 illustrates the configuration of a TV receiver 1 of another example. In the figure, the same reference numerals are assigned to the same constituent elements as the above embodiment (similarly below). The TV receiver 1 of this example is further equipped with a person sensor 12 which detects the presence of a person near the TV receiver 1. When the presence of a person is detected by the person sensor 12, the control circuit 9 (reception setting switching unit) switches the communication circuit 6 to the operating state, and when the presence of a person is not detected by the person sensor 12, it switches the communication circuit 6 to the standby state. The standby state is the state in which operation is stopped, and the control circuit 9 performs state switching of the communication circuit 6 by turning on and off the supply of power to the communication circuit 6 from a power supply not shown in the drawings.

In this example, when a person is not present near the TV receiver 1, the communication circuit 6 is set to the standby state even if another TV receiver 1 has transmitted an alert issuance information signal, and as a result, it cannot receive that alert issuance information signal. Therefore, when that alert issuance information signal is received, the broadcast reception circuit 3 and display device 5 cannot be switched to the operating state by automatic activation from the standby state. For this reason, unnecessary activation can be prevented.

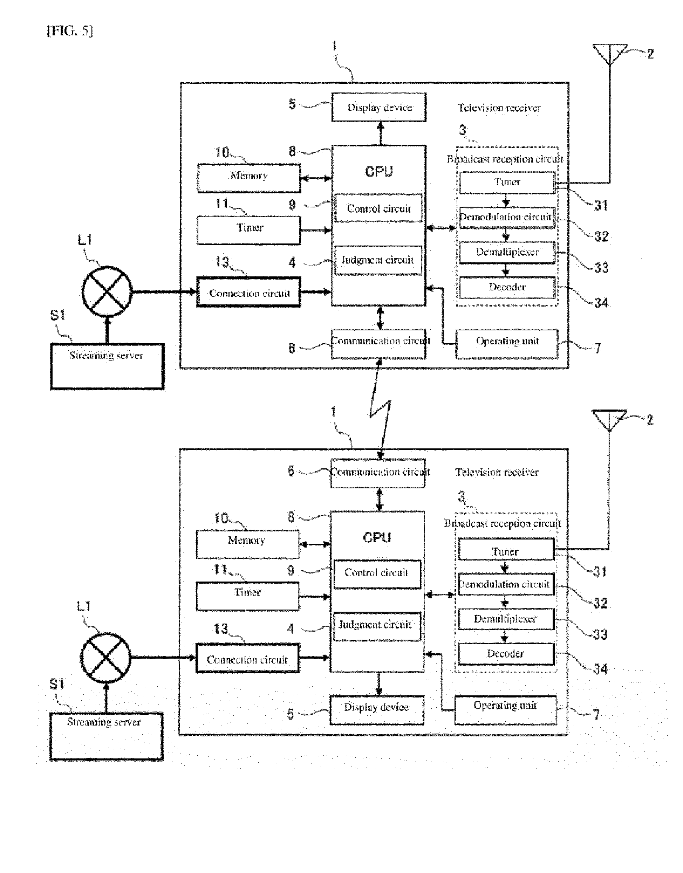

FIG. 5 illustrates the configuration of a TV receiver 1 of another example. The TV receiver 1 of this example is further equipped with a connection circuit 13 (connection unit) which can connect to a streaming server S1 (video playback device) via an Internet line L1. In this example, the display device 5 is configured such that it can display video played back in streaming format (referred to as "streaming video" hereinafter) by the streaming server S1 connected to the connection circuit 13. For this reason, in addition to the above-described broadcast reception mode and standby mode, the modes of the TV receiver 1 also include streaming mode. In streaming mode, the connection circuit 13 is in the operating state and the display device 5 displays streaming video, and during this display period, the broadcast reception circuit 3 goes into the standby state.

The aforementioned state switch of the operating unit 7 is configured so as to be capable of switching the TV receiver 1 between broadcast reception mode, standby mode and streaming mode. The control circuit 9 controls the broadcast reception circuit 3, display device 5 and connection circuit 13 according to the mode of the TV receiver 1 set using the operating unit 7. When in broadcast reception mode, the connection circuit 13 may be either in the operating state or standby state, but when in standby mode, the connection circuit 13 may be in the standby state.

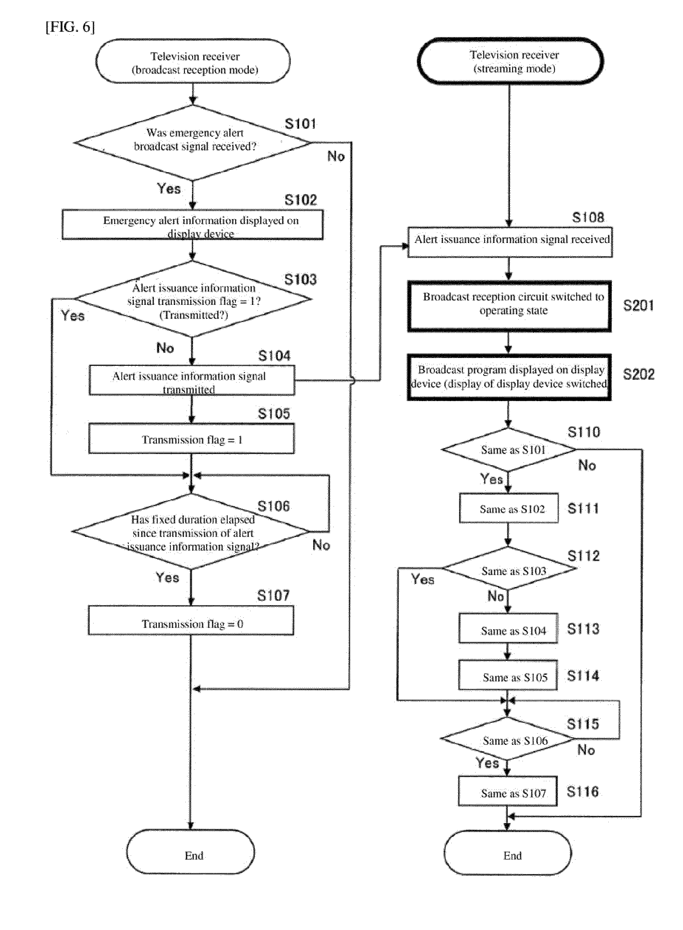

FIG. 6 illustrates the control process by the CPU 8 (judgment circuit 4 and control circuit 9) of this example. In FIG. 6, two TV receivers 1 are installed in the same way as in FIG. 3, and it is assumed that one TV receiver 1 is in broadcast reception mode and the other TV receiver 1 is in streaming mode. Since the control process of the TV receiver 1 in broadcast reception mode is the same as in FIG. 3, only the control process of the TV receiver 1 in streaming mode will be described here. In this control process, the process of S109 in the control process of the TV receiver 1 that is in standby mode shown in FIG. 3 is changed to the processes of S201 and S202. In the process of S201, when an alert issuance information signal is received by the communication circuit, the control circuit 9 switches the broadcast reception circuit 3 from the standby state to the operating state. In the process of S202, the control circuit 9 displays a broadcast program on the display device 5 based on the broadcast signal received by the broadcast reception circuit 3.

In this example, when an emergency alert broadcast signal is issued from a broadcasting station, when the communication circuit 6 receives an alert issuance information signal from the other TV receiver 1, even in streaming mode, the broadcast reception circuit 3 is switched from the standby state to the operating state. For this reason, the broadcast reception circuit 3 can receive an emergency alert broadcast signal and the display device 5 can display emergency alert information.

Also, even in streaming mode, the broadcast reception circuit is always operating in order to detect an emergency alert broadcast signal, and compared to the case where control of the broadcast reception circuit and display control of streaming video by the display device are both executed in the CPU, the amount of processing by the CPU 8 can be decreased in this example since control of the broadcast reception circuit 3 by the CPU 8 is not required in streaming mode, and the CPU 8 does not necessarily have to be a high-performance device. Therefore, manufacturing costs can be reduced.

Note that the present invention is not limited to the configuration of the above embodiments, and may be variously modified according to the purpose of use. For example, it can be configured such that when the TV receiver 1 is in broadcast reception mode, if the judgment circuit 4 judges that an emergency alert broadcast signal is included in the broadcast signal, the control circuit 9 transmits to the communication circuit 6 channel information which indicates the channel being received by the broadcast reception circuit 3 at the time, including the emergency alert broadcast signal. In this case, when the TV receiver 1 is in standby mode, if an alert issuance information signal is received from the another TV receiver 1 by the communication circuit 6, the control circuit 9 may switch the broadcast reception circuit 3 to the channel indicated by the channel information included in that alert issuance information signal. If configured in this manner, even if emergency alert broadcast signals are issued at different times by different broadcasting stations, when the broadcast reception circuit 3 in the TV receiver 1 that is in standby mode is switched to the operating state, the channel received by the broadcast reception circuit 3 is automatically set to the channel of the broadcasting station that is currently issuing an emergency alert broadcast signal, and therefore the received channel does not have to be manually switched in order to receive the emergency alert broadcast signal, saving the trouble of switching. Also, the example of FIG. 4 and the example of FIG. 5 can be combined.

### [Description of Reference Numerals]

- 1: TV receiver
- 3: Broadcast reception circuit (broadcast reception unit)
- 4: Judgment circuit (judgment unit)
- 5: Display device (display unit)
- 6: Communication circuit (information transmission unit, information reception unit)
- 9: Control circuit (control unit, reception setting switching unit)
- 10: Memory (storage unit)
- 12: Person sensor
- 13: Connection circuit (connection unit)

## Claims

1. A television receiver (1) comprising:
a broadcast reception unit (3) that receives broadcast signals from broadcasting stations;
a judgment unit (4) that judges whether or not an emergency alert broadcast signal is included in the broadcast signals received by the broadcast reception unit (3);
a display unit (5) that, when the judgment unit (4) judges that the emergency alert broadcast signal is included in the broadcast signals, displays emergency alert information based on the emergency alert broadcast signal;
an information transmission unit (6) that, when the judgment unit (4) judges that the emergency alert broadcast signal is included in the broadcast signals, wirelessly transmits to other television receivers (1) an alert issuance information signal indicating that a broadcasting station is broadcasting an emergency alert;
an information reception unit (6) that wirelessly receives the alert issuance information signal from other television receivers (1); and
a control unit (9) that, when the alert issuance information signal is received by the information reception unit (6), switches the broadcast reception unit (3) and the display unit (5) to an operating state if the broadcast reception unit (3) and the display unit (5) are in a standby state.

2. The television receiver (1) according to claim 1, further comprising a storage unit (10) that stores a transmission flag that is set to on when the alert issuance information signal has been transmitted and set to off when the alert issuance information signal has not been transmitted, wherein
the control unit (9) transmits the alert issuance information signal to the information transmission unit (6) and switches the transmission flag to the on state if the transmission flag stored in the storage unit (10) is in the off state when the judgment unit (4) judges that the emergency alert broadcast signal is included in the broadcast signal, and returns the transmission flag to the off state once a prescribed duration has elapsed after transmission of the alert issuance information signal, and does not transmit the alert issuance information signal to the information transmission unit (6) if the transmission flag is in the on state.

3. The television receiver (1) according to claim 1 or claim 2, further comprising a reception setting switching unit (9) that switches between the operating state and the standby state of the information reception unit (6).

4. The television receiver (1) according to any of claims 1-3, further comprising a connection unit (13) capable of connecting with a video playback device, wherein
the display unit (5) is capable of displaying video played back by the video playback device connected to the connection unit (13), and
the control unit (9) places the broadcast reception unit (3) into the standby state during the display period of the video by the display unit (5), and, when the alert issuance information signal is received by the information reception unit (6), switches the broadcast reception unit (3) to the operating state and displays emergency alert information on the display unit (5).

5. The television receiver (1) according to any of claims 1-4, wherein the information transmission unit (6) and the information reception unit (6) perform communication conforming to wireless LAN standards.
